# EUROPÄISCHE PATENTSCHRIFT

(11) **EP 3 172 414 B1**
(45) Veröffentlichungstag und Bekanntmachung des Hinweises auf die Patenterteilung: **11.11.2020**
(21) Anmeldenummer: 15781570.5
(22) Anmeldetag: 23.07.2015
(51) Int. Cl.: F01N 3/023, B01D 46/00, B05B 7/00, B05B 7/04, B05B 7/24, B05B 12/08, B01D 41/04, B05B 13/06

(54) **VERFAHREN ZUR REINIGUNG EINES PARTIKELFILTERS**
METHOD FOR CLEANING A PARTICULATE FILTER
PROCÉDÉ DE NETTOYAGE D'UN FILTRE À PARTICULES

(30) Priorität: 24.07.2014 DE 102014010842
(43) Veröffentlichungstag der Anmeldung: 31.05.2017
(73) Patentinhaber: Wepp GmbH, 36043 Fulda (DE)
(72) Erfinder: BEHRENS, Knut, 36043 Fulda (DE)
(74) Vertreter: Nitz, Astrid
(86) Internationale Anmeldenummer: PCT/DE2015/000366
(87) Internationale Veröffentlichungsnummer: WO 2016/011996

(56) Entgegenhaltungen:
- DE-A1-102008 038 026
- DE-A1-102011 011 997
- DE-A1-102011 102 218
- DE-A1-102013 008 147
- DE-U1- 29 822 384
- US-A1- 2003 080 445

## Beschreibung

Die Erfindung betrifft ein Verfahren zur Reinigung eines Partikelfilters nach dem Oberbegriff von Anspruch 1.

Bekannt ist es, den Partikelfilter bei einer Verunreinigung zu tauschen und aufwendig in einer Spezialeinrichtung durch Verbrennen oder einer großen Menge Reinigungsflüssigkeit zu reinigen, was häufig ein nicht zufriedenstellendes Ergebnis liefert.

DE 10 2013 008 147 A1 zeigt ein Verfahren und Reinigungseinrichtung zum Reinigen und Prüfen eines Partikelfilters, wobei zunächst der Partikelfilter aufwendig ausgebaut wird, anschließend mehrschrittig angesammelte Partikelfilter durch Erhitzen abgebrannt, ausgekühlt und im weiteren Schritt Asche mittels Druckluft ausgeblasen wird.

US 2003/0080445 A1 zeigt einen Schaumgenerator für schaumbildendes Pestizid und ein Verfahren zum Ausblasen Wandhohlräumen zur Insektenvernichtung mit schaumbildenden Pestizid.

Aufgabe der vorliegenden Erfindung ist es, ein Verfahren zur Reinigung eines Partikelfilters bereitzustellen, die einen sicheren, wartungsarmen Betrieb mit einem hohen Wirkungsgrad ermöglicht.

Die Aufgabe wird gelöst durch ein Verfahren zur Reinigung eines Partikelfilters, insbesondere unter Verwendung einer Vorrichtung zur Reinigung eines Partikelfilters von Verbrennungsmotoren, mit einem Mittel zur Bevorratung von flüssigem Reinigungsmittel unter Druck, mit einem Druckminderer bis auf einen Druck von etwa 2 bar, mit einem Mittel zum Transport des Reinigungsmittels bis zu einer Öffnung eines Innenraums des Partikelfilters, mit einem Mittel zum Erzeugen einer schaumartigen Konsistenz des Reinigungsmittels, insbesondere durch Übergang und/oder Ausdehnung in einen Bereich mit vergrößertem Volumen, nach Eintritt des Reinigungsmittels in die Öffnung des Innenraums des Partikelfilters, wobei das Mittel zum Transport einen versiegelten Schlauch zur Leitung zu einem Eingang eines Differenzdrucksensors an dem Partikelfilter umfasst. insbesondere dem Vordereingang des Differenzdrucksensors, bezogen auf die Strömungsrichtung von Partikeln durch den Partikelfilter, wobei in eine Öffnung vor dem Einströmen des Partikelstromes in den Partikelfilter eine Reinigungsmittel unter einem Druck von kleiner/gleich 2 bar aus einem Mittel zur Bevorratung durch ein Mittel zum Transport bis vor die Öffnung geliefert wird und sich dann im Innenraum des Partikelfilters zu einer schaumartigen Konsistenz ausdehnt.

Vorteilhaft ist es, wenn das Reinigungsmittel in einen Vordereingang eines Differenzdrucksensors eingefüllt wird.

Durch das erfindungsgemäße Verfahren wird der Partikelfilter durch Reinigungsmittel, das im Mittel zur Bevorratung flüssig ist und sich dann im Innenraum des Partikelfilters zu einem Schaum ausdehnt, nahezu vollständig gefüllt und somit mit einer geringen Menge Reinigungsmittel vollständig benetzt und somit in allen Bereichen gesäubert. Die Erzeugung des Schaums kann auf einfache Weise einfach durch die physikalische Ausdehnung aus einem Überdruckbereich im Mittel zum Transport in einen größeren Bereich mit niedrigerem Druck im Innenraum des Partikelfilters geschehen. Das Mittel zum Transport reicht nur bis vor den Innenraum und wird somit nicht verschmutzt oder kann nicht eventuell im Innenraum abbrechen und somit den Partikelfilter in seiner Funktion gefährden. Der einzusetzende Druck ist relativ gering und durch den Druckminderer abgesichert, so dass keine Gefährdung beim Bedienen entstehen kann.

Vorteilhaft ist es, wenn das Mittel zur Bevorratung einen Druckbecher mit einer Druckbecherpistole umfasst.

Vorteilhaft ist es, wenn das Mittel zum Transport einen Anschlussschlauch mit einem Mindestdurchmesser aufweist, der größer als die Öffnung ist, die in den Innenraum des Partikelfilters führen, so dass der Anschlussschlauch nicht in den Innenraum des Partikelfilters zu führen ist.

Vorteilhaft ist es, wenn das Mittel zum Transport mit einer Schnellkupplung an dem Druckbecher zu befestigen ist.

Erfindungsgemäss ist das Mittel zum Transport einen versiegelten Schlauch zur Leitung zu einem Eingang eines Differenzdrucksensors an dem Partikelfilter umfasst, insbesondere dem Vordereingang des Differenzdrucksensors, bezogen auf die Strömungsrichtung von Partikeln durch den Partikelfilter.

Vorteilhaft ist es, wenn das Reinigungsmittel in schaumartige Konsistenz umgewandelt den Innenraum des Partikelfilters im Wesentlichen füllt.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

### Es zeigen:

- Fig. 1: eine schematische Darstellung einer Vorrichtung zur Reinigung eines Partikelfilters und
- Fig. 2: eine schematische Darstellung eines Ausschnitts einer Vorrichtung zur Reinigung eines Partikelfilters.

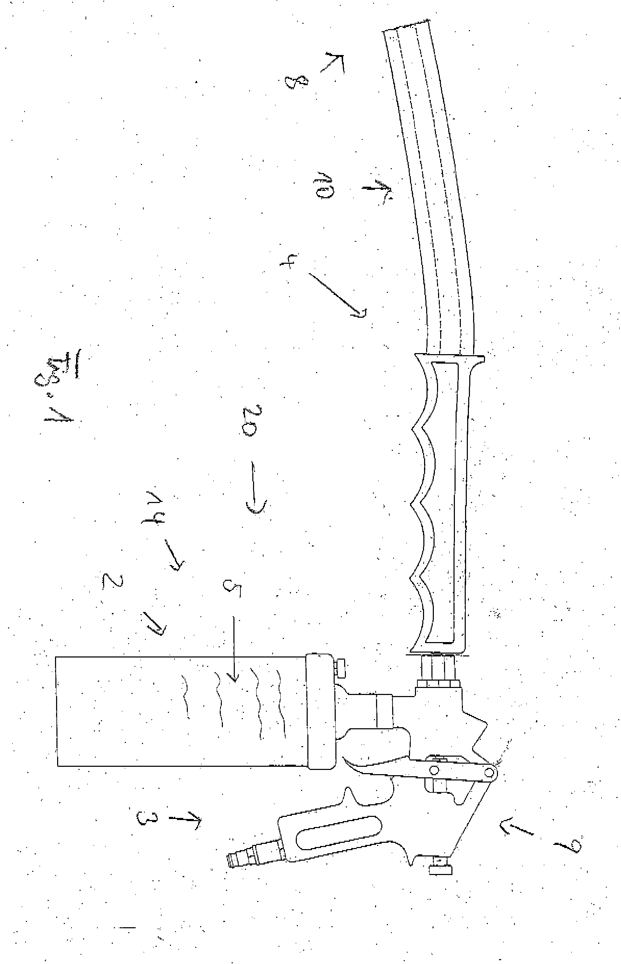

Fig. 1 zeigt eine schematische Darstellung einer Vorrichtung 20 zur Reinigung eines Partikelfilters 1. Eine Vorrichtung 20 zur Reinigung eines nicht dargestellten Partikelfilters von Verbrennungsmotoren, mit einem Mittel zur Bevorratung 2 von Reinigungsmittel 5 unter Druck, mit einem Druckminderer 3 bis auf einen Druck von etwa 2 bar, mit einem Mittel zum Transport 4 des Reinigungsmittels 5 bis zu einer Öffnung eines Innenraums des Partikelfilters, mit einem Mittel zum Erzeugen einer schaumartigen Konsistenz des Reinigungsmittels 5 mit vergrößertem Volumen nach Eintritt des Reinigungsmittels 5 in die Öffnung des Innenraums des Partikelfilters. Das Mittel zur Bevorratung 2 kann wie dargestellt einen Druckbecher 14 umfassen mit einer Druckbecherpistole 9.

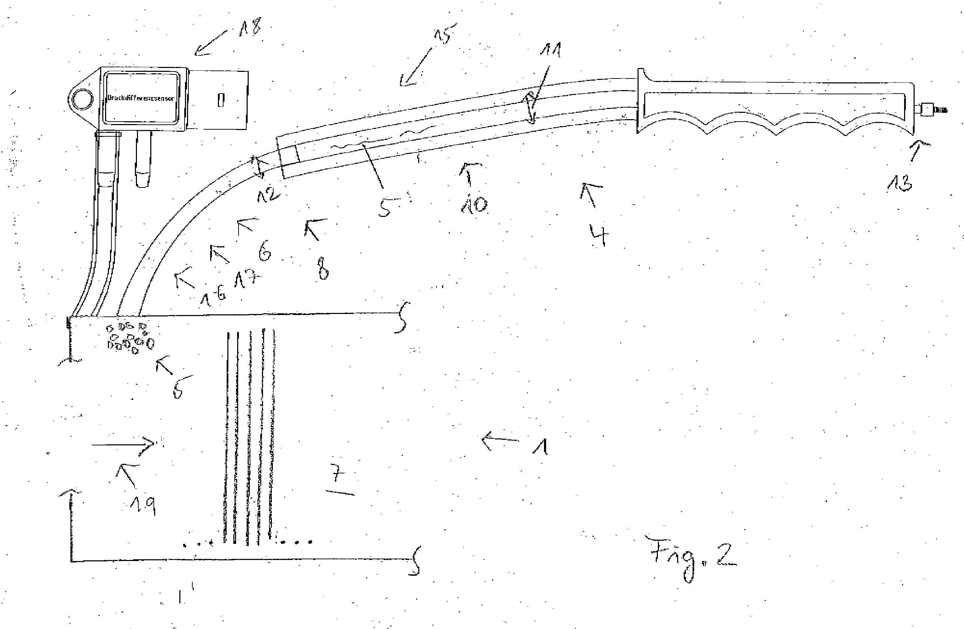

Fig. 2 zeigt eine schematische Darstellung eines Ausschnitts einer Vorrichtung 20 zur Reinigung eines Partikelfilters 1 mit einem Mittel 8 zum Erzeugen einer schaumartigen Konsistenz des Reinigungsmittels 5, insbesondere in einfacher Weise durch den physikalischen Übergang und/oder Ausdehnung in einen Bereich mit vergrößertem Volumen nach Eintritt des Reinigungsmittels 5 in die Öffnung 6 des Innenraums 7 des Partikelfilters 1. Das Mittel zum Transport 4 weist einen Anschlussschlauch 10 mit einem Mindestdurchmesser 11 aufweist, der größer als die Öffnung 12 ist, die in den Innenraum 7 des Partikelfilters 1 führen, so dass der Anschlussschlauch 10 nicht in den Innenraum 7 des Partikelfilters 1 zu führen ist. Der Anschluss an den Druckbecher kann vorteilhaft mit einer Schnellkupplung 13 erfolgen. Das Mittel zum Transport 4 weist beispielhaft einen versiegelten Schlauch 15 zur Leitung zu einem Eingang 16 eines Differenzdrucksensors 18 an dem Partikelfilter 1 auf, insbesondere dem Vordereingang 17 des Differenzdrucksensors 18, bezogen auf die Strömungsrichtung 19 von Partikeln durch den Partikelfilter 1.

### BEZUGSZEICHENLISTE

- 1: Partikelfilter
- 2: Mittel zur Bevorratung
- 3: Druckminderer
- 4: Mittel zum Transport
- 5: Reinigungsmittel
- 6: Öffnung
- 7: Innenraum
- 8: Mittel
- 9: Druckbecherpistole
- 10: Anschlussschlauch
- 11: Mindestdurchmesser
- 12: Öffnung
- 13: Schnellkupplung
- 14: Druckbecher
- 15: Schlauch
- 16: Eingang
- 17: Vordereingang
- 18: Differenzdrucksensor
- 19: Strömungsrichtung
- 20: Vorrichtung

## Patentansprüche

1. Verfahren zur Reinigung eines Partikelfilters (1), insbesondere unter Verwendung einer Vorrichtung (20) zur Reinigung eines Partikelfilters (1) von Verbrennungsmotoren, mit einem Mittel zur Bevorratung (2) von flüssigem Reinigungsmittel (5) unter Druck, mit einem Druckminderer (3) bis auf einen Druck von etwa 2 bar, mit einem Mittel zum Transport (4) des Reinigungsmittels (5) bis zu einer Öffnung (6) eines Innenraums (7) des Partikelfilters (1), mit einem Mittel (8) zum Erzeugen einer schaumartigen Konsistenz des Reinigungsmittels (5), insbesondere durch Übergang und/oder Ausdehnung in einen Bereich mit vergrößertem Volumen, nach Eintritt des Reinigungsmittels (5) in die Öffnung (6) des Innenraums (7) des Partikelfilters (1), wobei das Mittel zum Transport (4) einen versiegelten Schlauch (15) zur Leitung zu einem Eingang (16) eines Differenzdrucksensors (18) an dem Partikelfilter (1) umfasst, insbesondere dem Vordereingang (17) des Differenzdrucksensors (18), bezogen auf die Strömungsrichtung (19) von Partikeln durch den Partikelfilter (1), wobei in eine Öffnung (12) vor dem Einströmen des Partikelstromes in den Partikelfilter (1) eine Reinigungsmittel (5) unter einem Druck von kleiner/gleich 2 bar aus einem Mittel zur Bevorratung (2) durch ein Mittel zum Transport (4) bis vor die Öffnung (12) geliefert wird und sich dann im Innenraum (7) des Partikelfilters (1) zu einer schaumartigen Konsistenz ausdehnt.

2. Verfahren nach Anspruch 1, **dadurch gekennzeichnet, dass** das Mittel zur Bevorratung (2) einen Druckbecher (14) mit einer Druckbecherpistole (9) umfasst.

3. Verfahren nach Anspruch 1 oder 2, **dadurch gekennzeichnet, dass** das Mittel zum Transport (4) einen Anschlussschlauch (10) mit einem Mindestdurchmesser (11) aufweist, der größer als die Öffnung (12) ist, die in den Innenraum (7) des Partikelfilters (1) führen, so dass der Anschlussschlauch (10) nicht in den Innenraum (7) des Partikelfilters (1) zu führen ist.

4. Verfahren nach einem der Ansprüche 1 bis 3, **dadurch gekennzeichnet, dass** das Mittel zum Transport (4) mit einer Schnellkupplung (13) an dem Druckbecher (14) zu befestigen ist.

5. Verfahren nach einem der Ansprüche 1 bis 4, **dadurch gekennzeichnet, dass** das Reinigungsmittel (5) in schaumartige Konsistenz umgewandelt den Innenraum (7) des Partikelfilters (1) im Wesentlichen füllt.

6. Verfahren nach einem der Ansprüche 1 bis 5, **dadurch gekennzeichnet, dass** das Reinigungsmittel (5) in einen Vordereingang (17) eines Differenzdrucksensors (18) eingefüllt wird.

## Claims

1. Method for cleaning a particle filter (1), in particular using a device (20) for cleaning a particle filter (1) of internal combustion engines, with a means for storing (2) liquid cleaning agent (5) under pressure, with a pressure reducer (3) up to a pressure of approximately 2 bar, with a means for transporting (4) the cleaning agent (5) up to an opening (6) of an interior (7) of the particle filter (1), with a means (8) for producing a foam-like consistency of the cleaning agent (5), in particular by transition and/or expansion in a region with increased volume, after entry of the cleaning agent (5) into the opening (6) of the interior (7) of the particle filter (1), wherein the means for transporting (4) comprises a sealed hose (15) for conduction to an inlet (16) of a differential pressure sensor (18) at the particle filter (1), in particular the front inlet (17) of the differential pressure sensor (18), relating to the flow direction (19) of particles through the particulate filter (1), where in an opening (12) prior to the inflow of the particulate stream into the particulate filter (1) a cleaning agent (5) is supplied at a pressure of 2 bar or less from a storage agent (2) through a means of transport (4) to the opening (12), and then expands to a foam-like consistency in the interior (7) of the particulate filter (1).

2. Method according to claim 1, **characterised in that** the means of storage (2) includes a pressure cup (14) with a pressure cup gun (9).

3. Method according to claim 1 or 2, **characterised in that** the means of transport (4) has a connecting hose (10) with a minimum diameter (11) larger than the opening (12) leading into the interior (7) of the particulate filter (1), so that the connecting hose (10) is not to be led into the interior (7) of the particulate filter (1).

4. Method according to one of claims 1 to 3, **characterised in that** the means of transport (4) is to be attached to the pressure cup (14), with a quick coupling (13).

5. Method according to one of claims 1 to 4, **characterised in that** the detergent (5) transformed into foamy consistency essentially fills the interior (7) of the particulate filter (1).

6. Method according to one of claims 1 to 5, **characterised in that** the detergent (5) is inserted into a front entrance (17) of a differential pressure sensor (18).

## Revendications

1. Procédure de nettoyage d'un filtre à particules (1), en particulier avec utilisation d'un appareil (20) pour le nettoyage d'un filtre à particules (1) de moteurs à combustion interne, avec un moyen pour stocker (2) un agent de nettoyage liquide (5) sous pression, avec un réducteur de pression (3) jusqu'à une pression d'environ 2 bars, avec un moyen pour transporter (4) l'agent de nettoyage (5) vers une ouverture (6) d'un espace intérieur (7) du filtre à particules (1), avec un moyen (8) pour produire une consistance de type mousse de l'agent de nettoyage (5), notamment par le passage et/ou l'extension dans une zone à volume accru, après l'entrée du détergent (5) dans l'ouverture (6) de l'intérieur (7) du filtre à particules (1), le moyen de transport (4) comprend un tuyau étanche (15) destiné à être conduit à une entrée (16) d'un capteur de pression différentielle (18) sur le filtre à particules (1), en particulier l'entrée avant (17) du capteur de pression différentielle (18), par rapport à la direction d'écoulement (19) des particules à travers le filtre à particules (1), dans une ouverture (12) avant l'entrée du flux de particules dans le filtre à particules (1), un détergent (5) est fourni à partir d'un moyen de stockage (2) par un moyen de transport (4) jusqu'à l'ouverture (12) sous une pression égale ou inférieure à 2 bar et se dilate ensuite pour atteindre une consistance de mousse à l'intérieur (7) du filtre à particules (1).

2. Procédure selon la revendication 1, **caractérisée en ce que** le moyen de stockage (2) comprend une coupelle de pression (14) avec un pistolet à coupelle de pression (9).

3. Procédure selon la revendication 1 ou 2, **caractérisé en ce que** le moyen de transport (4) présente un tuyau de raccordement (10) avec un diamètre minimum (11) qui est plus grand que l'ouverture (12) menant à l'intérieur (7) du filtre à particules (1), de sorte que le tuyau de raccordement (10) ne peut pas être amené à l'intérieur (7) du filtre à particules (1).

4. Procédure selon l'une des revendications 1 à 3, **caractérisé en ce que** le moyen de transport (4) doit être fixé à la coupelle de pression (14) avec un raccord rapide (13).

5. Procédure selon l'une des revendications 1 à 4, **caractérisé en ce que** le produit de nettoyage (5), converti en une consistance de type mousse, remplit sensiblement l'intérieur (7) du filtre à particules (1).

6. Procédure selon l'une quelconque des revendications 1 à 5, **caractérisé en ce que** l'agent de nettoyage (5) est introduit dans une entrée frontale (17) d'un capteur de pression différentielle (18).
